# EUROPEAN PATENT SPECIFICATION

(11) **EP 1 250 976 B1**
(45) Date of publication and mention of the grant of the patent: **18.07.2018**
(21) Application number: 01830761.1
(22) Date of filing: 13.12.2001
(51) Int. Cl.: B23Q 1/00, B27F 1/00

(54) **Machine tool for machining elongated pieces**
Werkzeugmaschinen zum bearbeiten von länglichen Werkstücken
Machine-outil pour l'usinage de pièces allongées

(30) Priority: 20.04.2001 IT FI000068
(43) Date of publication of application: 23.10.2002
(73) Proprietor: Paolino Bacci S.r.l., 56021 Cascina, PI (IT)
(72) Inventor: Ruggieri, Alberto, 56025 Pontedera, Pisa (IT)
(74) Representative: Mannucci, Michele

(56) References cited:
- EP-A- 0 608 746
- EP-A- 0 634 247
- DE-A- 4 114 828
- DE-A- 4 114 895
- US-A- 3 685 915
- US-A- 4 649 971

## Description

The present invention relates to a machine tool for machining elongated pieces, in particular pieces made of wood or an equivalent material, especially, but not exclusively, components for the production of chairs, settees and other furniture articles.

The typical machining operations performed at the end portions of elongated pieces making up, for example, components of chairs or other pieces of furniture, include: cutting-off, tenoning, i.e., making of tenons or male parts of fixed joints, drilling, comb-milling or profiling, mortising, i.e. forming mortises that constitute the female parts of fixed joints, and forming other types of half-joints. There is a frequent need also to carry out intermediate processes, i.e. between the end portions of the piece. Amongst the latter there are machining operations similar to the ones on the end portions, especially drilling holes and making mortises, as well as internal and external contouring machining.

At present, for the execution of operations on the end portions, in addition to simpler machines and characterized by being less automatic, also used are machine tools of the so-called numerical-control double cutting-off/drilling/milling type. Examples of such machines are described in EP-A-0462940 and in EP-A-1050387. These machines have a support for the pieces to be machined, which is mainly made up of a system of two half-loaders set at an adjustable distance, which see to loading the pieces to be machined and to unloading the pieces that have been machined. At the sides of the two half-loaders are placed two operating heads carried by uprights which are mobile along the guides on which the half-loaders are arranged. The operating heads are, hence, external to the means for supporting the pieces to be machined and can each be used for machining one of the end portions of the piece. With these machines, it is not possible to machine the intermediate portion of the piece, between the two ends of the latter. From EP-A-0462940 there is known a numerical-control machine tool for machining pieces, said machine tool comprising: two operating heads, each being equipped with at least one work tool and one being mobile on a first horizontal guide, independently of the other, along a first numerical-control axis of horizontal translation; each of said operating heads being further provided with movements around two axes of rotation and supporting means for the pieces to be machined by said two operating heads.

In addition to the limitation represented by the impossibility of machining the portion between the two ends of the piece (which may reach lengths even greater than 2.5 m), the currently known machines present the drawback that the movement of positioning and/or the working movement of the operating units along the axis of horizontal translation towards the means for supporting the piece is conditioned by the presence of scraps deriving from the cutting-off of the pieces undergoing machining. The collection of these scraps is rendered difficult by the closeness of each operating unit to the respective half-loader. The total volume of the scraps increases cycle after cycle, and it becomes necessary to stop production periodically for collecting and removing the scraps. The chip-aspiration systems are not suitable for removal of scraps having a volume of a few cubic centimetres or more, which is a volume reached and frequently exceeded by the scraps deriving from cutting-off processes.

A good level of flexibility in the machining of elongated pieces is obtained with a machine tool of the type described in EP-A-0744244, where the piece being machined is carried by a rotating piece-holder equipped with a plurality of cantilever supports. However, this machine tool has a limited productivity in so far as it is equipped with just one operating unit and because to pass from machining of one piece to machining of the next piece, the single operating unit must translate by a length equal at least to the length of the piece, and this entails having available machines with a very long axis of horizontal translation. Alternatively, it is necessary to wait for completion of the to-and-fro movement of the piece-feed system, and this, in any case, reduces the productivity of the machine, or else, it is necessary to have available a double system for supporting the pieces, which entails double adjustment and would lead to collision with a possible loader.

EP1004397 and wo92/12816 disclose machine tools of the gantry type, wherein two or more operating heads are movable along two translation axes to operate on a workpiece underneath.

The object of the present invention is to provide a machine tool capable of achieving a high productivity and a high flexibility in machining elongated pieces, and which will enable execution not only of machining operations on the end portions of the pieces, but also of machining operations on the intermediate portions.

A further object of the present invention is to provide a machine tool of limited overall dimensions in the direction of development of the pieces, to reduce both the cost of the machine and the space occupied by the machine in production plants.

These and other objects and advantages, which will become evident to the persons skilled in the art from the following text, are basically obtained with a numerical-control machine tool according to claim 1. The dependent claims concern further advantageous embodiments and features.

The machine tool according to the invention may carry out machining both of end portions and in intermediate areas along the piece, working simultaneously with two heads. This is not possible with machines with double operating units of the same category, where the working area is limited to the end portions of the piece and where the operating units cannot position themselves alongside the piece in an intermediate area. As will emerge clearly from some possible examples of machining that can be carried out using a machine configured in this way, high production speed and high flexibility are obtained with this architecture.

The means for supporting the piece can consist of a working surface with clamping members of a mechanical, pneumatic or other type. However, according to a particularly advantageous embodiment of the invention, the means for supporting the piece consist of a pair of half-loaders, which can be adjusted at an appropriate distance according to the dimensions of the piece along a second horizontal guide, parallel to the first horizontal guide. In addition to the possibility of machining the piece in any position, this also enables the convenient removal of chips and scraps, for example by means of a system of conveyor belts that do not interfere with the first horizontal guide along which the two operating heads translate.

In practice, it may be advantageously envisaged that the first horizontal guide extends beyond the end portions of the supporting means, i.e. beyond the positions of maximum distance between said two half-loaders, and that each of said heads may be brought beyond both end portions of the supporting means, i.e., beyond the position of maximum distance between said two half-loaders.

In a practical embodiment of the invention, each operating head is provided with at least one movement of translation along a vertical axis and at least one movement of oscillation about a horizontal axis orthogonal to said first axis of horizontal translation. When performing these movements, the tool or tools carried by each head move within a respective envelope, i.e. within an ideal surface on which the points of the path travelled by the tools lie. Advantageously, the two envelopes within which the tool or tools of said two heads move interfere with one another when said heads are located in the position of maximum reciprocal approach along said first axis of horizontal translation. This approach, which is not possible with traditional machines with double operating unit, enables multiple machining operations to be carried out also on pieces of small dimensions. Appropriate programming of the movements, which the operator will perform each time according to the machining plan to be followed, will prevent any collision of the tools.

A machine configured as described above makes it possible to execute, for example, a method for machining elongated pieces, in particular mass-produced components, which comprises the steps of:
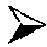 arranging a piece to be machined on respective supporting means in a machining position;
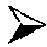 performing, with at least one first operating head equipped with at least one tool, at least a first machining operation on at least one first end of said piece; and
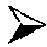 performing, with a second operating head - preferably superimposed on said first end-portion machining operation - a first machining operation in an intermediate position between the end portions of the piece.

The method may further envisage translating the second operating head parallel to the supporting means up to the second end of the piece, and carrying out at least a machining operation on said second end. Advantageously, it is possible to envisage translating also the first operating head parallel to said supporting means from the first end as far as an intermediate position along said supporting means and performing - before, after, or preferably during, machining of the second end portions - at least a further machining operation on said piece in an intermediate position between the end portions of the piece. This machining operation may constitute the completion of what was performed by the second operating head. In order to reduce the machining times, in this case it is advantageous to envisage the following: performing, with the first operating head, the machining operation on the first end of the piece, while the second operating head is positioned along the supporting means and carries out intermediate machining; subsequently translating the second operating head up to the second end of the piece and carrying out machining of the second end, the first operating head being positioned in an intermediate position between the two end portions of the piece in order to carry out the respective intermediate machining operation between said two end portions.

The invention will be better understood by reading the following description and the annexed drawing, which illustrates a non-limiting practical embodiment of the invention. More in particular, in the drawing:
Fig. 1 is a plan view of the machine tool;
Fig. 2 is a front view taken along the line II-II of Fig. 1;
Fig. 3 is a side view taken along the line III-III of Figs. 1 and 2; and
Figs. 4 to 9 illustrate various machining operations that can be performed using the machine of the present invention on different types of pieces.

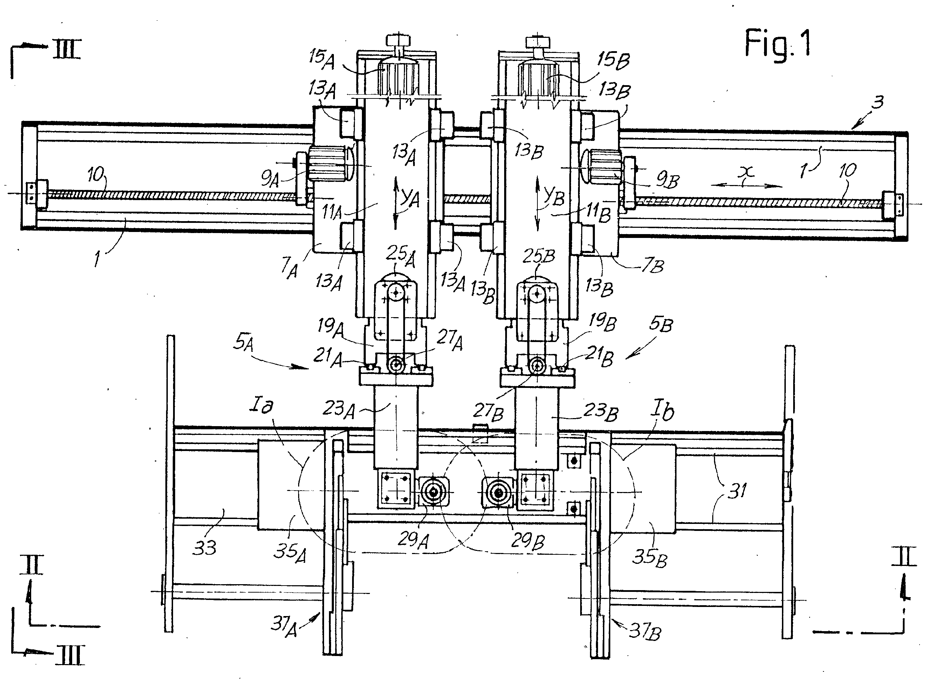

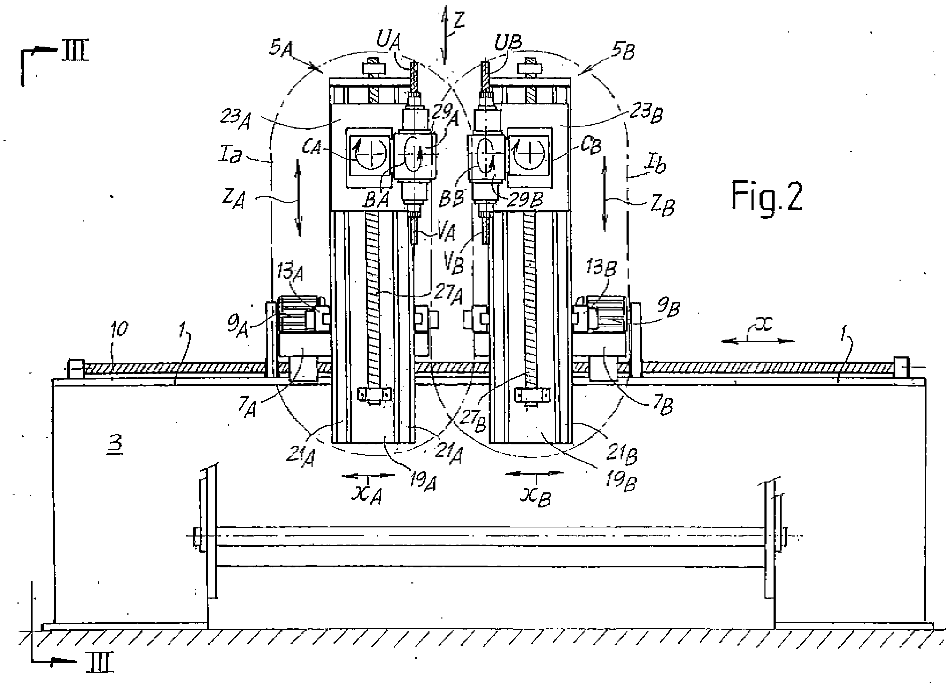

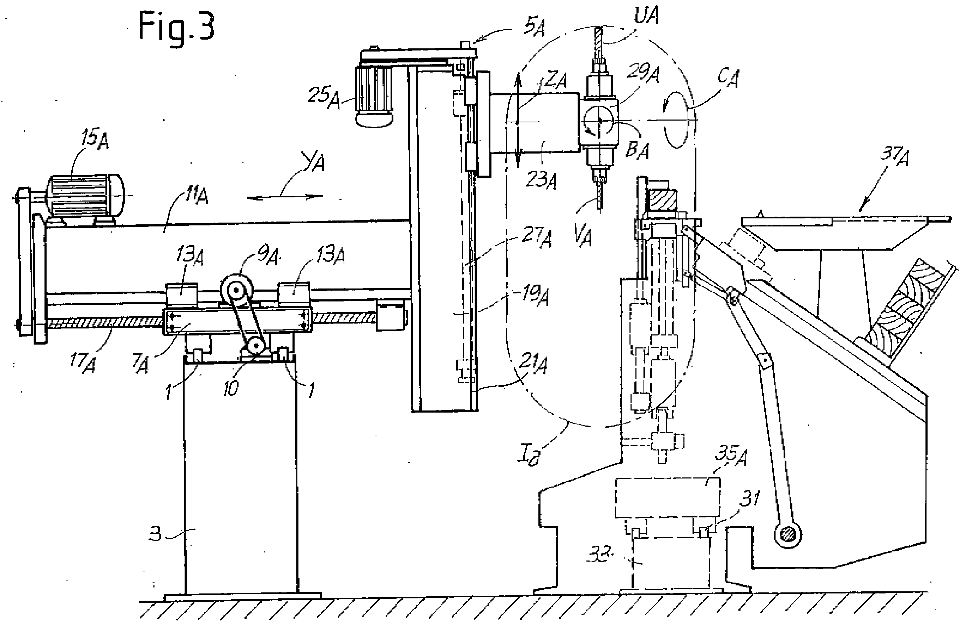

With reference first to Figs. 1 to 3, the machine tool has a first guide 1 provided on a machine bed 3. Along the guide 1 there slide two operating units designated as a whole by 5A and 5B. Each operating unit 5A, 5B comprises a carriage or slide 7A, 7B provided with a numerical-control movement along a first axis of horizontal translation, designated by X and parallel to the guide 1. The movement is obtained by means of motors 9A, 9B which carry in rotation nut threads co-operating with a threaded rod 10 parallel to the guide 1. In this way, each operating unit 5A, 5B may perform a travel along the X axis equal to the entire development of the guide 1 minus the overall dimensions of the other operating unit. In the example given, the two operating units are specular, but this is not strictly indispensable. The movements of the two operating units 5A, 5B along the numerical-control axis X are designated by XA and XB.

Each operating unit has a slide 11A, 11B guided in corresponding guides 13A, 13B carried by the carriages 7A, 7B of the respective operating unit 5A, 5B. The slides 11A, 11B translate along a second numerical-control axis of horizontal translation, designated by Y and orthogonal to the X axis. In the drawing, the movements along the Y axis of the two operating units 5A and 5B designated by YA and YB. The movement along the Y axis is governed by means of motors 15A, 15B and threaded rods 17A, 17B.

Each slide 11A, 11B carries a vertical upright 19A, 19B with vertical guides 21A, 21B, along which there translates a respective operating head 23A, 23B. The movement along the vertical guides 21A, 21B is controlled by respective motors 25A, 25B and threaded rods 27A, 27B. The movements of the two operating heads along a numerical-control axis of vertical translation Z are designated by ZA and ZB.

Each operating head 23A, 23B is equipped with a respective spindle 29A, 29B which carries, in the example illustrated, two tools UA, VA and UB, VB, respectively. The spindles are carried in a position that is off-centre with respect to the operating heads in such a way that they can assume a very small distance from one another when the operating units 5A, 5B are set alongside one another, for the purposes that will be clarified in what follows.

The two spindles 29A, 29B are each equipped with a movement along mutually orthogonal axes of oscillation BA, CA and BB, CB, as illustrated in the figures.

In practice, then, the tools of each operating unit 5A, 5B are controlled along five numerical-control axes: three axes of translation X, Y, Z (movements XA, YA, ZA; XB, YB, ZB) and two axes of rotation or oscillation B, C (movements BA, CA; BB, CB).

Each tool of each operating unit may move within a given envelope. This envelope is formed by the ideal surface on which the tool displaces when it moves along ZA, BA, CA for the unit 5A and along ZB, BB and CB for the unit 5B, whilst the unit is fixed with respect to the X and Y axes. The sizing and arrangement of the various machine members are such that, when the two operating units 5A, 5B are in the position of maximum approach, the two envelopes, designated by la and lb (dashed lines) in Figs. 1, 2 and 3, intersect. This makes it possible to carry out machining, simultaneously with both of the operating units, of pieces undergoing machining operations that are carried out even very close to one another, provided that the movements of the tools are programmed with sufficient care in order to prevent collisions. This can be done, for example, using an auxiliary program that verifies the work cycle programmed on a virtual machine.

Parallel to the machine bed 3 with the guides 1 there develops a second machine bed 33 equipped with guides 31 parallel to the guides 1. Along the guides 31 there translate slides 35A, 35B each carrying a half-loader for the pieces to be machined. The two half-loaders are generically designated by 37A and 37B. They can be made in a way known per se, for example as described in EP-A-0462940, EP-A-1050387 or, in greater detail, in EP-A-0509972. The structure and operation of the half-loaders are in themselves known and will not be described in greater detail herein. For a more detailed description of these half-loaders, reference is made to the publications cited herein. The position of the half-loaders can be adjusted and set along the guides 31 according to the specific machining requirements (shape and size of the pieces, type of machining to be carried out, etc.).

From what has been described above, it emerges clearly that each operating unit 5A, 5B with the respective operating head 23A, 23B and the work tools UA, VA, UB, VB can translate along the X axis so as to reach any point of the piece carried by the half-loaders 37A, 37B. For this purpose, the guide 1 has a length greater than the guides 31, and in particular, for example, a length that exceeds the length of the guides 31 by twice the dimension along the X axis of the slides 7A, 7B. In this way, each tool may reach any point of the piece being machined, and the two operating heads 23A, 23B may carry out simultaneous machining operations on end portions and/or intermediate portions along the piece.

Fig. 1 in particular shows the position that the operating heads can assume between the two half-loaders in order to carry out machining along the intermediate portion of the piece, which will rest on the two half-loaders projecting from them laterally with its end portions.

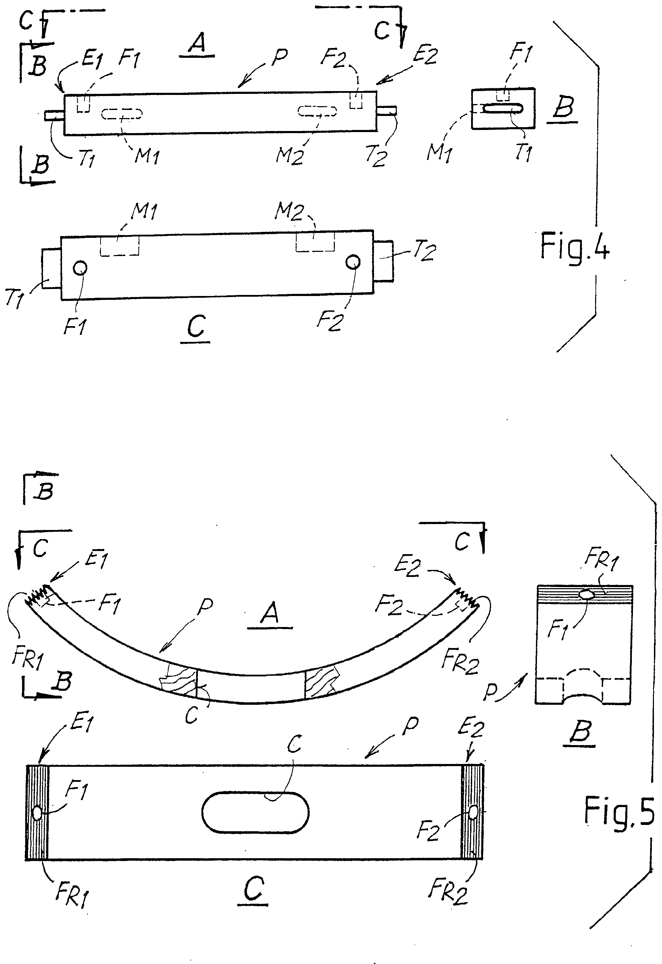

For a better understanding of the advantages in terms of flexibility and productivity that may be obtained using the machine tool according to the invention, the subsequent Figs. 4A-9B illustrate a number of possible working operations that can be carried out on pieces of various shapes.

Figs. 4A, 4B, 4C present three views of a piece P with two end portions E1 and E2 in which two tenons T1 and T2 are made, i.e., two male half-joints. In positions intermediate between the end portions E1, E2 the piece P presents two mortises, i.e., two slots M1, M2 on a first face and two holes F1, F2 on a second face orthogonal to the first. This piece can be machined with a sequence of the type described in what follows. The piece is loaded by the half-loaders 37A, 37B, for example with the face on which the mortises M1, M2 are to be made facing towards the operating units 5A, 5B. The two operating heads carry out, in a first step, cutting-off of the end portions, i.e. they bring the piece to size. Next, each unit makes the two tenons T1, T2 and in sequence drills the holes F1, F2, and then the mortises M1 and M2, or vice versa. If the mortises M1, M2 were too close together and such that they cannot be worked simultaneously by the two operating heads, the mortise M2 could be performed by the operating head 23B whilst the operating head 23A carries out the tenon T1.

If the machining requires more than two types of tool for each operating head, it is possible to envisage, in a way known per se, a tool magazine and a tool-change device and/or an operating head with more than two tools, for example with two cross spindles.

Figs. 5A, 5B, 5C illustrate a possible different machining process of a different type of piece, again designated by P and having two end portions E1, E2. These each present a comb-milling FR1, FR2 and hole F1, F2. In the central area, the piece P has an internal contour C. The machining process performed by the operating heads 23A, 23B can be the following: cutting-off of the end portions by means of the two heads; simultaneous drilling of the two holes F1, F2 and subsequently execution of the two comb-millings FR1, FR2, or vice versa; execution of the internal contour C by means of one of the two heads, the operating unit of which translates until it reaches approximately the centre between the two half-loaders 37A, 37B.

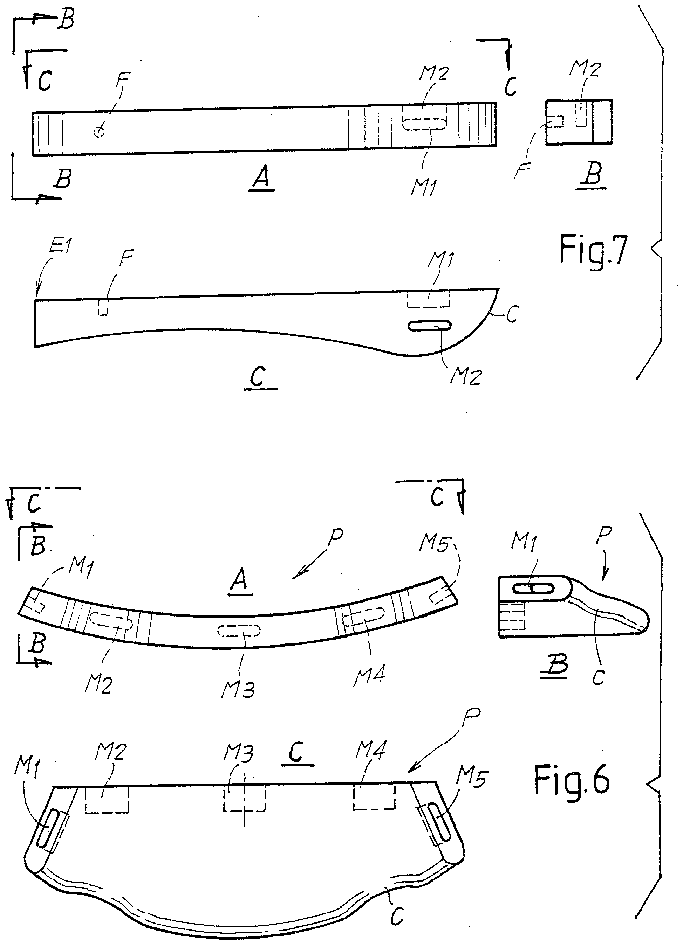

Figs. 6A, 6B, 6C show a different piece P of greater complexity, which may constitute, for example, the back of a chair. The piece P has mortises M1-M5 and an external contour C. The machining operations may envisage a double cutting-off to form the inclined faces on which the mortises M1, M5 are then formed. The cutting-off is performed simultaneously on the two sides of the piece by the two operating heads. Next, the mortises M1, M5 are performed and then the mortises M2 and M4, or vice versa; subsequently, the mortise M3, and finally the external contour C are made. In order to reduce the machining times, it is possible to envisage carrying out the operations as follows: in the first place, the cutting-off operations simultaneously on the two end portions; and subsequently, by means of one operating unit, the external contour C, whilst the other operating unit carries out the mortises compatibly with the movement of the operating unit that performs the contour C.

The piece P of Figs. 7A, 7B, 7C presents an end portion E1 with a cutting-off, a profile with an external contour C, a hole F, and two mortises M1, M2 on two mutually orthogonal faces. The machining may be performed, for example, by carrying out the cutting-off operation on the end E1 and drilling the hole F with a first operating unit, whilst the second operating unit makes the contour C with an appropriate staggering in time to prevent collision of the two operating units. Once the contour C has been completed, the first or the second operating unit can make the mortises M1 and M2.

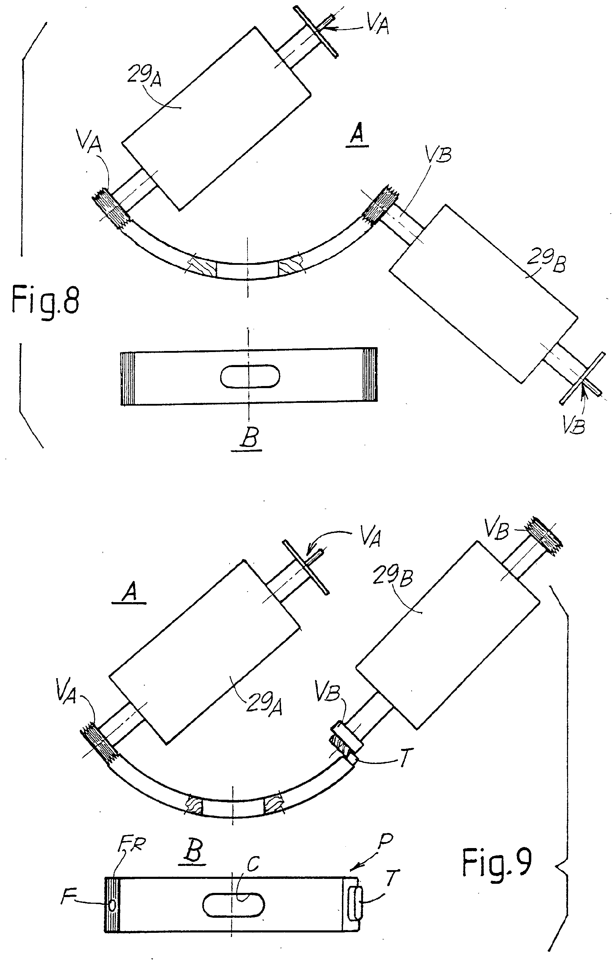

Figs. 8A and 8B show an arched piece equivalent to that of Fig. 5. Fig. 8A also shows the position of the spindles 29A, 29B in one machining step. The two comb-millings are performed simultaneously by the two heads with an appropriate inclination of the spindles, which are positioned above and below the piece so as not to interfere with one another. With similar positionings the holes (F1, F2; Fig. 5) are drilled, by rotation of the spindles about the axis CA, CB (orthogonal to the plane of the figure). The backing-off of one of the operating units from the working area thus enables the other unit to translate as far as the intermediate area and carry out the internal contouring.

Figs. 9A, 9B show the machining of an arched piece similar to that of Fig. 8, but having one end with a comb-milling and a drilled hole, and the opposite end with a tenon T. Fig. 9A shows the position that the spindles 29A, 29B can assume to carry out simultaneously comb-milling by means of the tool VA and tenoning by means of the tool VB after the cutting-off operations have been carried out in a previous machining step. A simultaneous rotation of the two spindles about the axis CA, CB enables the tool UA to be brought into operation to carry out drilling of the hole F without any collisions occurring between the tools. Subsequently (or previously), the internal contour C is performed.

The examples of machining operations described above show how the structure of the machine according to the invention enables high productivity and high flexibility to be achieved. In addition, the problems regarding the accumulation and removal of scraps are eliminated, in so far as it is possible to provide, for example, a pair of belt conveyors underneath and outside the two half-loaders, i.e. in the area in which the cutting-off operations are performed, which generate the scraps of largest dimensions. These or other scrap removal systems do not hinder the movement of the operating units, which translate on guides parallel to the ones where the half-loaders are located. If the half-loaders are replaced by other types of supports for supporting the piece, for example a supporting surface with clamping means, there are similar advantages, in particular in terms of scrap removal and working flexibility.

It is to be understood that the drawing shows nothing more than a practical exemplification of the invention, which may vary in the embodiments and arrangements without thereby departing from the idea that lies at the basis of the invention. The possible presence of reference numbers in the annexed claims has the sole purpose of facilitating reading and understanding thereof in the light of the foregoing description and of the attached drawing, and in no way limits the sphere of protection.

## Claims

1. A numerical-control machine tool for machining pieces (P) of elongated shape, in particular for making joints on end portions on said pieces, said machine tool comprising:
• two operating heads (5A, 5B), each being equipped with at least one work tool (UA, VA; UB, VB) and being mobile on a first horizontal guide (1), independently of one another, along a first numerical-control axis of horizontal translation (XA, XB); each of said operating heads (5A, 5B) being further provided with movements around two axes of rotation (BA, CA; BB, CB);
• and supporting means (37A, 37B) for the pieces (P) to be machined by said two operating heads;
wherein said first guide (1) develops alongside the supporting means (33, 37A, 37B) to enable the translation of the operating heads (5A, 5B) along said first horizontal guide (1) also in an intermediate area of said supporting means (37A, 37B), so that said operating heads and the relevant tools can translate along the axis of horizontal translation (XA, XB) to reach any point of a piece carried by the supporting means (37A, 37B) and carry out machining of both the end portions and intermediate areas along the piece, working simultaneously with the two operating heads (5A, 5B) at the piece (P); and wherein said at least one working tool (UA, VA; UB, VB) of said operating heads (5A, 5B) is controlled, independently from one another, along three numerical-controlled axes of translation (X, Y, Z) and two numerical-controlled axes of rotation (B, C).

2. The machine according to claim 1, **characterized in that** said supporting means comprise two half-loaders (37A, 37B) that can be adjusted along a second horizontal guide (31), parallel to said first horizontal guide (1) and separate from the latter to enable translation of the two operating heads (5A, 5B) along the first horizontal guide (1) also in the area between the two half-loaders (37A, 37B).

3. The machine tool according to claim 1 or 2, **characterized in that** said operating heads (5A, 5B) are each carried by a vertical upright (19A, 19B), along which the head is mobile according to a vertical axis (ZA, ZB) of translation, said uprights being each carried by a carriage (7A, 7B) mobile along said first horizontal guide (1).

4. The machine tool according to claim 1 or 2 or 3, **characterized in that** each of said heads (5A, 5B) is mobile along a second axis of horizontal translation (YA, YB), orthogonal to said first horizontal guide (1).

5. The machine tool according to one or more of the foregoing claims, **characterized in that** said first horizontal guide (1) extends beyond the end portions of the supporting means (33; 37A, 37B), or beyond the positions of maximum distance between said two half-loaders (37A, 37B), and **in that** each of said heads (5A, 5B) can be brought beyond at least one end of the supporting means, or beyond the position of maximum distance between said two half-loaders.

6. The machine tool according to one or more of the foregoing claims, **characterized in that** each operating head (5A, 5B) is provided with a movement of translation along a vertical axis (ZA, ZB) and with at least one movement of oscillation about a horizontal axis (CA, CB) orthogonal to said first axis of horizontal translation (ZA, ZB), the tool or tools (UA, VA; UB, VB) carried by each head (5A, 5B) moving within a respective envelope (la, lb), the two envelopes within which the tool or tools of said two heads move interfering with one another when said heads find themselves in the position of maximum reciprocal approach along said first axis of horizontal translation (XA, XB).

7. The machine tool according to one or more of the foregoing claims, **characterized in that** each operating head (23A, 23B) is equipped with a respective spindle (29A, 29B) and that said spindles are carried in a position that is off-centre with respect to the respective operating head.

8. A method for machining elongated pieces, in particular of chair components, with a numerical-control machine according to any one of the preceding claims, said method comprising the steps of:
providing a supporting means (33, 37A, 37B) for supporting the pieces (P) to be machined;
placing a piece (P) to be machined on said supporting means (33, 37A, 37B) in a machining position, said piece having end portions and an intermediate portion between said end portions;
performing, with said first operating head (5A; 5B), at least one first machining operation on at least one first end portion of said piece;
performing, with said second operating head (5B; 5A), a first machining operation in an intermediate position between the end portions of the piece.

9. The method according to claim 8, **characterized by** translating said second operating head (5B; 5A) parallel to the supporting means (33, 37A, 37B) and bringing it up to the second end portion of the piece, and carrying out at least one end-portion machining operation on said second end portion of said piece.

10. The method according to claim 8, **characterized by** translating said first operating head (5A; 5B) parallel to said supporting means (33, 37A, 37B) up to an intermediate position along said supporting means and carrying out - before, during or after the machining of the second end portion - at least one further machining operation on said piece in an intermediate position between the end portions thereof.

11. The method according to claim 10, **characterized by**: carrying out, by means of the first operating head (5A; 5B), said machining operation of said first end portion of the piece, whilst the second operating head (5B, 5A) is positioned along the supporting means (33, 37A, 37B) and carries out the intermediate-portion machining operation; subsequently translating the second operating head (5B) up to the second end portion of the piece and carrying out the machining of said second end portion, the first operating head (5A; 5B) being positioned in an intermediate position between the two end portions of the piece to carry out the respective machining operation on the intermediate portion between said two end portions.

12. The method according to any one of claims 8 to 11, **characterized in that** the machining of said end portions comprises the making of at least one component of a joint.

## Patentansprüche

1. Numerisch gesteuerte Werkzeugmaschinen für Werkstücke (P) mit länglicher Form, insbesondere zur Herstellung von Verbindungen an Endteilen der Stücke, wobei die Werkzeugmaschine aufweist:
zwei Arbeitsköpfe (5A, 5B), von denen jeder mit mindestens einem Arbeitswerkzeug (UA, VA; UB, VB) ausgestattet ist und auf einer horizontalen Führung (1) unabhängig voneinander entlang einer ersten numerisch gesteuerten Achse einer horizontalen Bewegung (XA, XB) bewegbar ist, wobei jeder der Arbeitsköpfe (5A, 5B) ferner mit Bewegungen um zwei Drehachsen (BA, CB; BB,CB) versehen ist,
und einer Trägereinrichtung (37A, 37B) für die Stücke (P), die durch die beiden Arbeitsköpfe zu bearbeiten werden,
wobei sich die erste Führung (1) entlang der Trägereinrichtung (33, 37A, 37B) erstreckt, um die Bewegung der Arbeitsköpfe (5A, 5B) entlang der ersten horizontalen Führung (1) auch in einem Zwischenbereich der Trägereinrichtung (37A, 37B) zu ermöglichen, sodass die Arbeitsköpfe und die relevanten Werkzeuge entlang der Achse der horizontalen Bewegung (XA, XB) bewegt werden können, um jeden Punkt eines Stücks zu erreichen, das von der Trägereinrichtung (37A, 37B) getragen wird, und eine Bearbeitung von beiden Endteilen und Zwischenbereichen entlang des Stücks durchzuführen, wobei simultan mit den beiden Arbeitsköpfen (5A, 5B) an dem Stück (P) gearbeitet wird, und wobei mindestens ein Arbeitswerkzeug (UA, VA; UB, VB) der Arbeitsköpfe (5A, 5B) unabhängig von den anderen entlang drei numerisch gesteuerter Bewegungsachsen (X, Y, Z) und zwei numerisch gesteuerten Drehachsen (B, C) gesteuert wird.

2. Werkzeugmaschine nach Anspruch 1, **dadurch gekennzeichnet, dass** die Trägereinrichtung zwei Halblader (37A, 37B) aufweist, die entlang einer zweiten horizontalen Führung (31) parallel zu der ersten horizontalen Führung (1) und separat von letzterer eingestellt werden können, um eine Bewegung der beiden Arbeitsköpfe (5A, 5B) entlang der ersten horizontalen Führung (1) auch in dem Bereich zwischen den beiden Halbladern(37A, 37B) zu ermöglichen.

3. Werkzeugmaschine nach Anspruch 1 oder 2, **dadurch gekennzeichnet, dass** die Arbeitsköpfe (5A, 5B) jeder durch einen vertikalen Ständer (19A, 19B) getragen werden, entlang dssen der Kopf entsprechend einer vertikalen Achse (ZA, ZB) der Bewegung mobil ist, wobei die Ständer jeweils durch einen Schlitten (7A, 7B) getragen werden, der entlang der ersten horizontalen Führung (1) mobil ist.

4. Werkzeugmaschine nach Anspruch 1, 2 oder 3, **dadurch gekennzeichnet, dass** jeder der Köpfe (5A, 5B) entlang einer zweiten Achse der horizontalen Bewegung (YA, YB), orthogonal zu der ersten horizontalen Führung (1) mobil ist.

5. Werkzeugmaschine nach einem oder mehreren der vorstehenden Ansprüche, **dadurch gekennzeichnet, dass** sich die erste horizontale Führung (1) über die Endteile der Trägereinrichtung (33; 37A, 37B) oder über die Positionen des maximalen Abstandes zwischen den beiden Halbladern (37A, 37B) erstreckt und das jeder der Köpfe (5A, 5B) über mindestens ein Ende der Trägereinrichtung oder über die Position des maximalen Abstandes zwischen den beiden Halbladern gebracht werden kann.

6. Werkzeugmaschine nach einem oder mehreren der vorstehenden Ansprüche, **dadurch gekennzeichnet, dass** jeder der Arbeitsköpfe (5A, 5B) mit einer Translationsbewegung entlang einer vertikalen Achse (ZA, ZB) und mit mindestens einer Oszillationsbewegung um eine Horizontalachse (CA, CB) orthogonal zu der ersten Achse der horizontalen Bewegung (ZA, ZB) versehen ist, wobei das Werkzeug oder die Werkzeuge (UA, VA; UB, VB), die durch jeden Kopf (5A, 5B) getragen werden, sich innerhalb einer jeweiligen Enveloppe (la, lb) bewegen, wobei die beiden Enveloppen, innerhalb deren sich das Werkzeug oder die Werkzeuge der beiden Köpfe bewegen, interferieren, wenn die Köpfe sich in der Position der maximalen Hin- und Herbewegung entlang der ersten Achse der horizontalen Bewegung (XA, XB) treffen.

7. Werkzeugmaschine nach einem oder mehreren der vorstehenden Ansprüche, **dadurch gekennzeichnet, dass** jeder Arbeitskopf (23A, 23B) mit einer jeweiligen Spindel (29A, 29B) versehen ist und dass die Spindeln in einer Position getragen werden, die außermittig mit Bezug auf den jeweiligen Arbeitskopf ist.

8. Verfahren zur Bearbeitung von länglichen Werkstücken insbesondere von Stuhlkomponenten, mit einer numerisch gesteuerten Maschine nach einem der vorstehenden Ansprüche, wobei das Verfahren die Schritte aufweist:
Vorsehen einer Trägereinrichtung (33, 37A, 37B) zum Tragen der Stücke (P), die zu bearbeiten sind,
Platzieren eines Stücks (P), das zu bearbeiten ist, auf der Trägereinrichtung (33, 37A, 37B) in einer Bearbeitungsposition, wobei das Stück Endteile und einen Zwischenteil zwischen den beiden Endteilen aufweist,
Durchführen von mindestens einem ersten Bearbeitungsvorgang an mindestens einem ersten Endteil des Stücks mit dem ersten Arbeitskopf (5A, 5B),
Durchführen eines ersten Bearbeitungsvorgang an einer Zwischenposition zwischen den beiden Endteilen des Stücks mit dem zweiten Arbeitskopf (5B, 5A).

9. Verfahren nach Anspruch 8, **gekennzeichnet durch** die Bewegung des zweiten Arbeitskopfs(5B; 5A) parallel zu der Trägereinrichtung (33, 37A, 37B) und Hinbringen zu dem zweiten Endteil des Stücks und Durchführen von mindestens einem Endbereich-Bearbeitungsvorgang an dem zweiten Endteil des Stücks.

10. Verfahren noch Anspruch 8, **gekennzeichnet durch** Bewegen des ersten Arbeitskopf (5A, 5B) parallel zu der Trägereinrichtung (33, 37A, 37B) hin zu einer Zwischenposition entlang der Trägereinrichtung und Durchführen - vor, während oder nach der Bearbeitung des zweiten Endbereichs - von mindestens einem weiteren Bearbeitungsvorgang an dem Stück in einer Zwischenposition zwischen seinen Endbereichen.

11. Verfahren Anspruch 10, **gekennzeichnet durch**: Durchführen, mittels des ersten Arbeitskopfes (5A, 5B), des Bearbeitungsvorgangs des ersten Endbereichs des Stücks, während der zweite Arbeitskopf (5B, 5A) entlang der Trägereinrichtung (33, 37A, 37B) positioniert ist und den Zwischenbereich-Bearbeitungsvorgang ausführt, anschließendes Bewegen des zweiten Arbeitskopfes (5B) zu dem zweiten Endteil des Stücks und Durchführen der Bearbeitung des zweiten Endteils, wobei der erste Arbeitskopf (5A, 5B) in einer Zwischenposition zwischen den beiden Endteilen des Stücks positioniert ist, um den jeweiligen Bearbeitungsvorgang an dem Zwischenteil zwischen den beiden Endteilen durchzuführen.

12. Verfahren nach einem der Ansprüche 8 bis 11, **dadurch gekennzeichnet, dass** die Bearbeitung der Endteile die Herstellung von mindestens einer Komponente einer Verbindung umfasst.

## Revendications

1. Une machine-outil à commande numérique pour l'usinage de pièces (P) de forme allongée, en particulier pour réaliser des jonctions sur des parties d'extrémité desdites pièces, ladite machine-outil comprenant :
• deux têtes opérationnelles (5A, 5B), chacune étant équipée d'au moins un outil d'usinage (UA, VA ; UB, VB) et étant mobile sur un premier guide horizontal (1), indépendamment de l'autre, le long d'un premier axe de commande numérique de translation horizontale (XA, XB) ; chacune desdites têtes opérationnelles (5A, 5B) étant en outre capable de mouvements autour de deux axes de rotation (BA, CA ; BB, CB) ;
• et des moyens de support (37A, 37B) pour les pièces (P) à usiner à l'aide desdites deux têtes opérationnelles ;
dans laquelle ledit premier guide (1) se développe le long des moyens de support (33, 37A, 37B) pour permettre la translation des têtes opérationnelles (5A, 5B) le long dudit premier guide horizontal (1) également dans une zone intermédiaire desdits moyens de support (37A, 37B), de sorte que lesdites têtes opérationnelles et leurs outils respectifs puissent se déplacer le long de l'axe de translation horizontal (XA, XB) pour atteindre tout point d'une pièce portée par les moyens de support (37A, 37B) et exécuter un usinage des deux parties d'extrémité et des zones intermédiaires le long de la pièce, en usinant simultanément avec les deux têtes opérationnelles (5A, 5B) au niveau de la pièce (P) ; et dans laquelle au moins un outil d'usinage (UA, VA ; UB, VB) desdites têtes opérationnelles (5A, 5B) est commandé, indépendamment des autres, le long de trois axes de translation (X, Y, Z) commandés numériquement et de deux axes de rotation (B, C) commandés numériquement.

2. La machine selon la revendication 1, **caractérisée en ce que** lesdits moyens de support comprennent deux demi-chargeurs (37A, 37B) qui peuvent être réglés le long d'un second guide horizontal (31), parallèlement audit premier guide horizontal (1) et séparément de ce dernier pour permettre la translation des deux têtes opérationnelles (5A, 5B) le long du premier guide horizontal (1) également dans la zone entre les deux demi-chargeurs (37A, 37B).

3. La machine-outil selon la revendication 1 ou 2, **caractérisée en ce que** lesdites têtes opérationnelles (5A, 5B) sont chacune portées par une montant vertical (19A, 19B), le long duquel la tête est mobile suivant un axe vertical (ZA, ZB) de translation, lesdits montants étant chacun portés par un chariot (7A, 7B) mobile le long dudit premier guide horizontal (1).

4. La machine-outil selon la revendication 1, 2 ou 3, **caractérisée en ce que** chacune desdites têtes (5A, 5B) est mobile le long d'un second axe de translation horizontal (YA, YB), orthogonal audit premier guide horizontal (1).

5. La machine-outil selon une ou plusieurs des revendications précédentes, **caractérisée en ce que** ledit premier guide horizontal (1) s'étend au-delà des parties d'extrémité des moyens de support (33 ; 37A, 37B), ou au-delà des positions de distance maximale entre lesdits deux demi-chargeurs (37A, 37B), et **en ce que** chacune desdites têtes (5A, 5B) peut être amenée au-delà d'au moins une extrémité des moyens de support, ou au-delà de la position de distance maximale entre lesdits deux demi-chargeurs.

6. La machine-outil selon une ou plusieurs des revendications précédentes, **caractérisée en ce que** chaque tête opérationnelle (5A, 5B) est capable d'un mouvement de translation le long d'un axe vertical (ZA, ZB) et avec au moins un mouvement d'oscillation autour d'un axe horizontal (CA, CB) orthogonal audit premier axe de translation horizontal (ZA, ZB), l'outil ou les outils (UA, VA ; UV, VB) porté(s) par chaque tête (5A, 5B) se déplaçant à l'intérieur d'une enveloppe respective (Ia, Ib), les deux enveloppes à l'intérieur desquelles l'outil ou les outils desdites deux têtes se déplacent en interférant les uns avec les autres lorsque lesdites têtes se trouvent elles-mêmes dans la position d'approche maximale l'une de l'autre le long dudit premier axe de translation horizontal (XA, XB).

7. La machine-outil selon une ou plusieurs des revendications précédentes, **caractérisée en ce que** chaque tête opérationnelle (23A, 23B) est équipée d'une broche respective (29A, 29B) et **en ce que** lesdites broches sont portées sans une position qui est excentrée par rapport à la tête opérationnelle correspondante.

8. Un procédé d'usinage de pièces allongées, en particulier des composants de chaise, à l'aide d'une machine à commande numérique selon une ou plusieurs des revendications précédentes, ledit procédé comprenant les étapes consistant à :
prévoir des moyens de support (33, 37A 37B) pour supporter les pièces (P) à usiner ;
placer une pièce (P) à usiner sur lesdits moyens de support (33, 37A, 37B) dans une position d'usinage, ladite pièce ayant des parties d'extrémité et une partie intermédiaire entre lesdites parties d'extrémité ;
exécuter, avec ladite première tête opérationnelle (5A, 5B), au moins une première opération d'usinage sur au moins une première partie d'extrémité de ladite pièce ;
exécuter, avec ladite seconde tête opérationnelle (5B, 5A), une première opération d'usinage dans une position intermédiaire entre les parties d'extrémité de la pièce.

9. Le procédé selon la revendication 8, **caractérisé par** la translation de ladite seconde tête opérationnelle (5B, 5A) parallèlement aux moyens de support (33, 37A, 37B) et sa remontée jusqu'à la seconde partie d'extrémité de la pièce, et l'exécution d'au moins une opération d'usinage de partie d'extrémité sur ladite seconde partie d'extrémité de ladite pièce.

10. Le procédé selon la revendication 8, **caractérisé par** la translation de ladite première tête opérationnelle (5A ; 5B) parallèlement auxdits moyens de support (33, 37A, 37B) vers le haut jusqu'à une position intermédiaire le long desdits moyens de support et l'exécution - avant, durant ou après l'usinage de la seconde partie d'extrémité - d'au moins une autre opération d'usinage sur ladite pièce dans une position intermédiaire entre ses parties d'extrémité.

11. Le procédé selon la revendication 10, **caractérisé par** l'exécution, au moyen de ladite première tête opérationnelle (5A, 5B), de ladite opération d'usinage de ladite première partie d'extrémité de la pièce, tandis que la seconde tête opérationnelle (5B, 5A) est positionnée le long des moyens de support (33, 37A, 37B) et exécute l'opération d'usinage de partie intermédiaire ; ensuite, la translation de la seconde tête opérationnelle (5B) vers le haut jusqu'à la deuxième partie d'extrémité de la pièce et l'exécution de l'usinage de ladite seconde partie d'extrémité, la première tête opérationnelle (5A, 5B) étant positionnée dans une position intermédiaire entre les deux parties d'extrémité de la pièce pour exécuter l'opération d'usinage respective sur la partie intermédiaire entre les deux parties d'extrémité.

12. Le procédé selon l'une quelconque des revendications 8 à 11, **caractérisé en ce que** l'usinage desdites parties d'extrémité comprend la réalisation d'au moins un composant d'une jonction.
